# EUROPEAN PATENT APPLICATION

(11) **EP 2 019 204 A1**
(43) Date of publication of application: **28.01.2009**
(21) Application number: 07113032.2
(22) Date of filing: 24.07.2007
(51) Int. Cl.: F03D 11/00, F03D 1/06

(54) **Wind turbine protection**

(71) Applicant: GENERAL ELECTRIC COMPANY, Schenectady, NY 12345 (US)
(72) Inventor: Kraemer, Sebastian, Munich (DE); Lewke, Bastian, 82467, Garmisch-Partenkirchen (DE); Mendez-Hernandez, Yaru, Munich (DE)
(74) Representative: Bedford, Grant Richard

(57) **Abstract**

The invention relates to lightning protection for wind turbines. A lightning protection system 200 for a wind turbine blade 108 of a wind turbine 100 may comprise a conductive lightning receptor 201 for mounting at the surface 212 of a turbine blade 108 such that a portion of the lightning receptor 201 projects beyond a trailing edge 210 of the turbine blade 108 when mounted at said surface 212 and/or a lightning receptor 201 that has a generally elongated shape and that is configured to be mounted such that the greatest dimension of the lightning receptor 201 lies generally parallel to the direction in which the turbine blade 108 is designed to move.

## Description

### Field

The present invention relates generally to the protection of wind turbines, such as those used for generating electricity for example. More particularly, the present invention relates to lightning protection for wind turbines.

### Background

Recently the use of renewable energy sources to generate electricity has grown enormously as environmental issues have become prominent in the public's mind. One such energy source that has found great favour is the wind turbine.

In order to operate efficiently, and extract the maximum useful energy from wind, wind turbines are necessarily situated in relatively windy regions whenever possible. However, such regions tend to be located in the more inhospitable and remote parts of the world, and further often suffer from a relatively high incidence of thunder storms. This makes is desirable to provide such wind turbines with lightning protection in order to minimise the downtime and number of repairs that might be needed, and thus improve the reliability of the electricity supply derived from those wind turbines.

In view of these desires, many systems have been developed for protecting wind turbines, and various parts thereof, from damage by lightning strikes. For example, there exist systems for protecting wind turbine hubs and bearings [1,2,3,4], systems for protecting turbine blades [5,6,7,8,9,10] and even systems for protecting whole wind turbines [11,12,13,14].

When lightning strikes an object, the attachment process of the lightning discharge follows the physical laws of discharges. For example, lightning striking a wind turbine might appear in one of two ways: namely, upward lightning in which a lightning discharge starts from the turbine and moves upward toward the clouds or downward lightning in which a lightning bolt discharge starts from a charged thunder cloud and descends towards the wind turbine. For the interested reader the International Electrotechnical Commission 2002 Technical Report [15] provides more details of these mechanisms, as well as a comprehensive background introduction to some of the principles and problems involved in protecting wind turbine generator systems from lightning strikes.

Normally, since wind turbines are made to operate during thunderstorms because of the good wind conditions, high rotation speeds of the wind turbine rotor are used. However, such high speed rotation, in combination with the unpredictability of the lightning discharge direction, can cause a lightning strike in which the strike discharge on a turbine blade does not remain at a static position, but which instead attaches to and moves over the turbine blade's surface. This in turn can lead to so-called swept strokes that may result in multiple punctures (or stitching) of the blade's surface. Moreover, even where such multiple punctures do not occur, the final breakdown of the lightning is likely to appear at the trailing edge of the struck blade, and this is one reason why most turbine blade damage often occurs at this edge.

Hence, whilst conventional lightning protection systems are usually better than no protection at all, it is not uncommon for the blades of wind turbines using such conventional lightning protection systems to suffer from delamination of their trailing edges and/or from damage caused by swept strokes when they are struck by lightning.

Accordingly, there still exists a need to provide improved systems and methods for protecting wind turbine blades from lightning strikes.

### Summary of the invention

The Applicant has realised that in general, conventional wind turbine lightning strike protection systems are not designed to account for the fact that a wind turbine is a rotating system, but are usually designed with the stationary electrostatic properties of the wind turbine in mind. For example, since the electrostatic field potential *E_{A}* when a blade is in a first position "A" is not necessarily the same as the electrostatic field potential *E_{B}* when the blade is in a second position "B", the electrostatic field potential may change over time. Hence, according to various aspects of the present invention, the Applicant has addressed the shortcomings of such conventional systems by accounting for the dynamic electrical properties of a wind turbine system when considering the interaction of lightning strikes with mobile wind turbine blades.

Hence, according to a first aspect of the present invention there is provided a lightning protection system for a wind turbine blade. The lightning protection system comprises a conductive lightning receptor for mounting at the surface of a turbine blade such that a portion of the lightning receptor projects beyond a trailing edge of the turbine blade when mounted at the surface of the turbine blade.

By providing a lightning receptor that projects beyond a trailing edge of the turbine blade, protection is provided for the trailing edge of the blade whilst it is moving. In addition, various embodiments of such a lightning receptor can be used to discharge electrostatic charge from the blade. They can also be used to control the shape of the dynamic electrostatic field potential around the blade thereby enabling a controlled discharge path to be created for the channelling of lightning strikes from a moving blade. Such lightning receptors may, for example, be embedded in the skin structure of a blade or may be surface mounted thereto, the latter being more easily retrofitted to existing turbine blades.

According to a second aspect of the invention, there is provided a lightning protection system for a wind turbine blade. The lightning protection system comprises a conductive lightning receptor for mounting at the surface of a turbine blade. The lightning receptor has a generally elongated shape and is configured to be mounted such that the greatest dimension of the lightning receptor lies generally parallel to the direction in which the turbine blade is designed to move.

By providing a lightning receptor having a generally elongated shape that is configured to be mounted such that the greatest dimension of the lightning receptor lies generally parallel to the direction in which the turbine blade is designed to move, protection against swept strokes that move across the surface of the blade is provided.

For example, relatively thin metallic wire-like or whisker-like structures may be used as a lightning receptor, and these may be placed in a position on a blade such that they lie generally tangentially to the arcuate path subscribed by the blade when it rotates, or substantially along at least part of the path of such an arcuate path. Moreover, the use of relatively thin or narrow elongated structures for such lightning receptors provides the further advantage that no significant increase in surface drag is added to the blade. Such receptors also further improve the stability of the electrostatic field potential as it evolves over time such that any lightning strike is less likely to give rise to an uncontrolled swept stroke, particularly when the blade is in motion.

According to a third aspect of the present invention, there is provided a turbine blade for a wind turbine. The turbine blade comprises a shaped blade structure provided with one or more lightning buses made from conductive material and a lightning protection system according to the first or second aspect of the present invention mounted at the surface of the turbine blade and electrically coupled to the one or more lightning buses. Various embodiments of the present invention may use a plurality of such lightning buses provided in a turbine blade. This provides electrical wiring redundancy which further improves reliability, increases the maintenance interval and improves the total operational lifetime for such blades.

According to a fourth aspect of the present invention, there is provided a wind turbine for generating electricity. The wind turbine comprises a supporting tower structure comprising a lightning conductor for electrically coupling to a ground potential at a first end thereof, a nacelle supported by the tower structure, an electrical generator housed in the nacelle, a rotateable hub mechanically coupled to the electrical generator, and at least one turbine blade according to the third aspect of the present invention mechanically coupled to the hub. The one or more lightning buses of the at least one turbine blade are electrically coupled through the rotateable hub to a second end of the lightning conductor such that the lightning protection system is electrically connected to the first end of the lightning conductor.

For example, the first end of the lightning conductor may be connected to an earth potential via an earth/ground plate embedded in soil and the second end may terminate in the hub at a slip ring connector connected to the lightning bus of a turbine blade, as is known in the art. In various embodiments, the lightning conductor may be provided as an internal or external down-conductor attached to or provided within the tower structure.

According to a fifth aspect of the present invention, a method of generating electricity is provided. The method comprises operating a wind turbine according to the fourth aspect of the present invention and supplying the electricity generated to an electricity grid for subsequent consumption by a consumer. One advantage of such a method is that supply reliability is improved, particularly in stormy weather and thundercloud conditions.

According to a sixth aspect of the present invention, there is provided a method for protecting a wind turbine from lightning strikes. The method comprises retrofitting a lightning protection system according to the first or second aspects of the present invention to an existing wind turbine by electrically connecting each of at least one lightning receptor to a respective lightning bus of a respective turbine blade of the existing wind turbine and mounting the or each lightning receptor at a respective surface of a respective turbine blade of the existing wind turbine. Since various existing wind turbine blades often have lightning buses, e.g. with pin-point type external lightning conductors, such a method can provide improved lightning protection for various conventional wind turbines at modest cost and with relatively little installation effort. The one or more lightning receptors needed can be provided in kit form for this purpose.

### Brief description of the drawings

Figure 1 shows a wind turbine according to an embodiment of the present invention;
Figure 2 shows a conventional wind turbine rotor blade;
Figure 3 shows a cross section taken in a plane A-A' through the rotor blade of Figure 2;
Figure 4 shows a wind turbine blade according to an embodiment of the present invention;
Figure 5 shows a cross section taken in a plane B-B' through the rotor blade of Figure 4;
Figure 6 shows a cross section taken through an alternative embodiment of a rotor blade according to an embodiment of the present invention;
Figure 7 shows a cross section taken through another embodiment of a rotor blade according to an embodiment of the present invention;
Figure 8 shows a cross section taken through a further embodiment of a rotor blade according to an embodiment of the present invention;
Figure 9 shows a lightning receptor according to an embodiment of the present invention;
Figure 10 shows a lightning receptor according to another embodiment of the present invention; and
Figure 11 shows a lightning receptor according to a further embodiment of the present invention.

### Detailed description

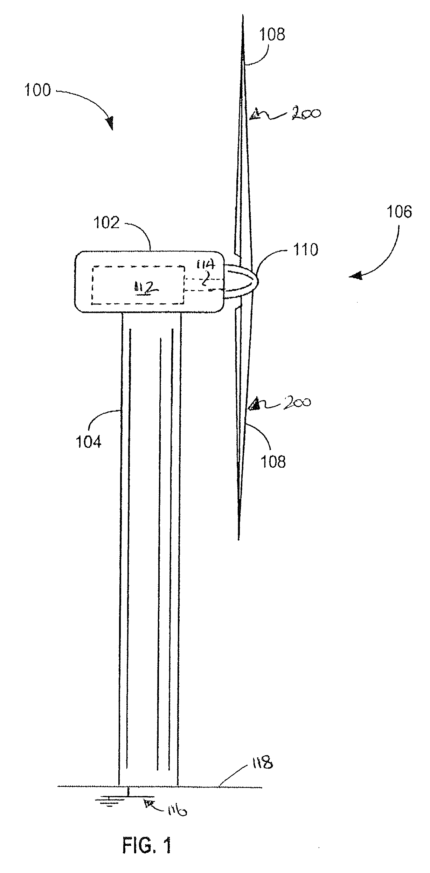

Figure 1 shows an embodiment of a wind turbine 100 according to the present invention. The wind turbine 100 includes a nacelle 102, a tower 104, and a rotor 106 having at least one rotor blade 108 and a rotateable hub 110. The nacelle 102 is mounted on the tower 104 and also houses an electrical generator 112. Rotor blades 108 are attached to the hub 110 and rotate the hub 110 when there is sufficient wind strength to move the blades 108. The hub 110 is mechanically coupled to the generator 112 by a coupling mechanism 114, which may comprise a gear mechanism (not shown), such that rotation of the hub 110 causes operation of the electrical generator 112 to generate electricity.

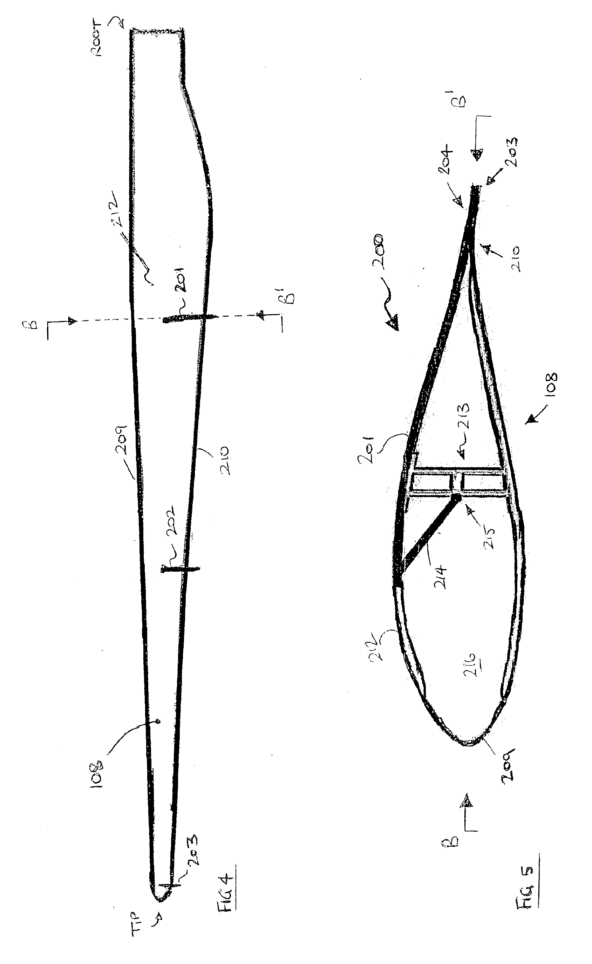

The structure of the tower 104 comprises a lightning conductor or down-conductor (not shown for clarity) for electrically coupling to a ground potential at a first end thereof. The first end of the lightning conductor is connected to an earth potential via an earth/ground plate 116 embedded in soil 118 and the second end terminates in the hub 110 at a slip ring connector (not shown for clarity). The slip ring connector electrically couples the second end of the down-conductor to respective lightning buses 215 (shown in Figure 5) of the turbine blades 108, as is known in the art.

In turn, each lightning bus 215 of a turbine blade 108 is electrically coupled to a respective lightning protection system 200 (shown in Figure 5) according to an embodiment of the present invention. For the purpose of illustration, various embodiments of such lightning protection systems are described in more detail below.

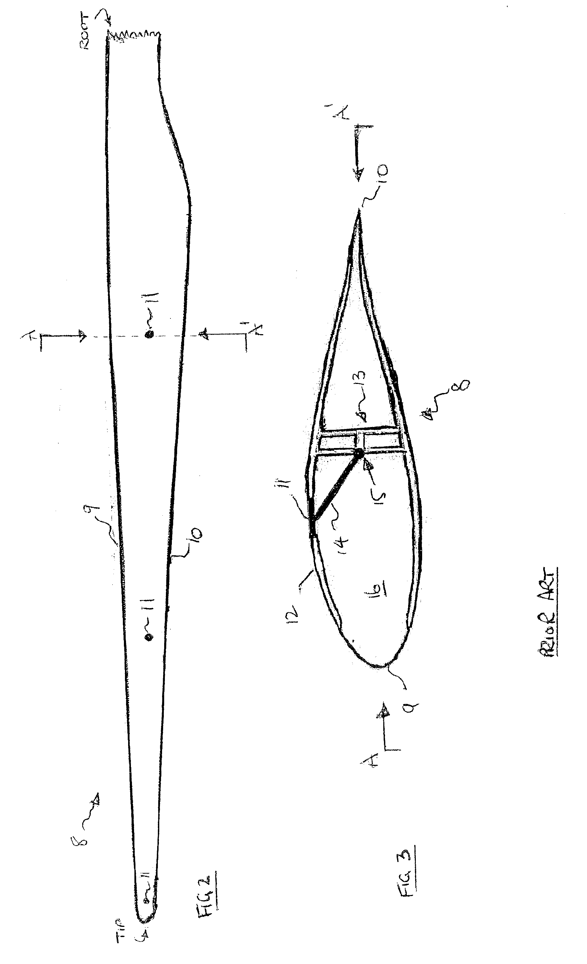

Figures 2 and 3 show a conventional wind turbine rotor blade 8 in order to aid in understanding the present invention. Figure 3 shows a cross section taken in a plane A-A' through the rotor blade 8 of Figure 2.

The rotor blade 8 is formed of an airfoil shaped glass reinforced plastic (GRP) structure having a hollow centre portion 16. The rotor blade also has a leading edge 9 and trailing edge 10 formed of relatively thin portions of GRP material.

Embedded within a suction/low-pressure surface 12 of the airfoil shaped structure are at least three lightning receptors 11. These lightning receptors 11 are formed of pad-shaped conductive material spaced radially along the surface 12 of the blade 8. Each lightning receptor 11 is electrically coupled via a respective connector 14 to an internal wire (e.g. made of steel, aluminium, copper etc.) forming a lightning bus 15 that is disposed within the hollow centre portion 16 of the blade 8. The lightning bus 15 is supported by an internal brace 13, that serves to strengthen and maintain the shape of the blade 8, and can be connected to a conventional lightning down-connector provided within a wind turbine structure near the root-end of the blade 8.

Figure 4 shows a wind turbine blade 108 according to an embodiment of the present invention. The structure of the blade 108 is itself similar to a conventional blade 8 in that the rotor blade 108 is formed of an airfoil shaped GRP structure having a hollow centre portion 216. The rotor blade also has a leading edge 209 and trailing edge 210 formed of relatively thin portions of GRP material (e.g. provided as a single GRP sheet as opposed to a double sheet GRP design provided for the rest of the structure). GRP material is used as it is relatively light and has a good strength to weight ratio.

However, a key difference between the conventional blade 8 and the blade 108 according to this embodiment of the present invention is the provision of the lightning protection system 200. The lightning protection system 200 of this embodiment comprises preferably at least three lightning receptors 201, 202, 203 embedded within a suction surface 212 of the blade 108. These lightning receptors 201, 202, 203 are formed of elongated needle-shaped conductive material spaced radially along the surface 212 of the blade 108.

In various embodiments, the lightning receptors 201, 202, 203 may be fixed during the lamination process, for example, by being embodied into a GRP shell/surface. The shape of the lightning receptors may be mostly generally circular in cross section with materials ranging from copper to aluminium to steel (e.g. any metal with good electrical and thermal conductivity) and the dimensions may vary, although in general they should be large enough to carry all of the maximum envisaged current and to dissipate the associated maximum thermal heat likely to be generated.

In various embodiments, laminated GRP material is used. For example, crossed layers of GRP material can be used, as can GRP layers provided with a PVC middle layer. The Applicant also envisages the use of carbon reinforced plastic (CRP) material for the provision of blades since the use of GRP, which is an insulator, can lead to an enhanced risk of puncture or delamination with the attendant risk that, since GRP cannot easily dissipate heat that might be generated, it may start to burn.

The three lightning receptors 201, 202, 203 are shown by way of example only, and it is noted that various alternative embodiments of the invention may operate with one or more such lightning receptor sited at a suction and/or pressure surface of a turbine rotor blade. However, the provision of a plurality of lightning receptors is preferred in certain embodiments as it does provide for improved protection over the length of the turbine blade 108.

Figure 5 shows a cross section taken in a plane B-B' through the rotor blade 108 of Figure 4. Each lightning receptor 201, 202, 203 is electrically coupled via a respective connector 214 to a lightning bus 215 that is disposed within the hollow centre portion 216 of the blade 108. The lightning bus 215 is supported by an internal brace 213, that serves to strengthen and maintain the shape of the blade 108, and can be connected to a lightning down-connector provided within a wind turbine structure 100 near the root-end of the blade 108. The brace 213 may be formed of GRP or CRP material, either integrally with the airfoil shaped structure of the blade 108 or as a separate component affixed therein.

The lightning receptors 201, 202, 203 are formed of narrow shaped elongated metallic conductive material (such as, for example, corrosion resistant copper, steel or aluminium), and have tapered ends 203 that project beyond the trailing edge 210 of the turbine blade 108. For example, the lightning receptor 201 may comprise a portion 204 having a length in the B-B' plane from about 5% to about 20%, 30%, 40%, 50% etc. of the total length of the lightning receptor 201 that projects beyond the trailing edge 210 of the turbine blade 108, the total length of the lightning receptors 201, 202, 203 being dependent upon their relative citing position along the radius of the blade 108 in a root to tip direction. Such a projecting portion 204 may be at least several centimetres in length so that it can serve as the final breakdown position for a lightning strike.

Because of their shape and position at the external surface of the blade 108, the lightning receptors 201, 202, 203 are particularly suited for attracting a lightning strike even when the blade 108 is rotating. Additionally, because the lightning receptors 201, 202, 203 overhang the trailing edge 210 of the blade 108, they tend to continue to attract the lightning strike as its discharge nears the trailing edge 210 of the blade 108. This helps ensure that the lightning strike remains attached to a respective rotating lightning receptor 201, 202, 203 at the trailing edge 210 of the blade 108 until it is completely discharged, thus helping to reduce the chance that the lightning strike causes damage to the blade 108 at the trailing edge 210.

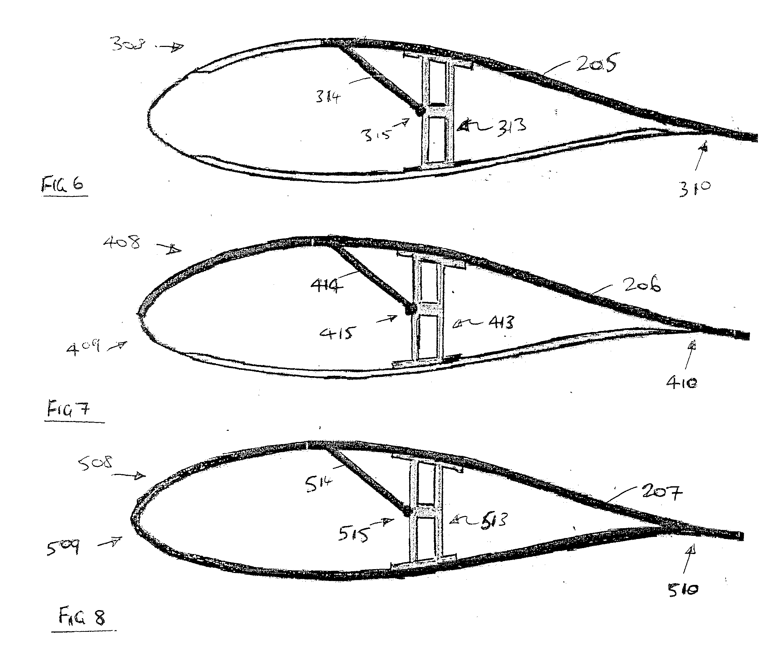

Figure 6 shows a cross section taken through an alternative embodiment of a rotor blade 308 according to an embodiment of the present invention. In this embodiment, the brace 313 is formed as a separate moulded GRP or/and CRP component, and not as an integral part of the structure of the blade 308. The brace 313 is attached to the structure of the blade 308 and the lightning receptor 205 by bonding using a suitable epoxy resin.

The lightning receptor 205 is of elongated form and extends over part of a suction surface of the blade 308 to project beyond the trailing edge 310 of the blade 308. The lightning receptor 205 thus provides improved lightning protection for the blade 308 over the suction surface of the blade 308 and at the trailing edge 310.

Figure 7 shows a cross section taken through another embodiment of a rotor blade 408 according to an embodiment of the present invention. The rotor blade 408 includes a brace 413 formed as a separate moulded GRP and/or CRP component bonded to the internal structure of the blade 408. The brace supports a lightning bus 415 that is electrically coupled to a lightning receptor 206 through a connector 414.

The lightning receptor 206 is of elongated form and extends over a suction surface of the blade 408 from leading edge 409 to project beyond the trailing edge 410 of the blade 408. The lightning receptor 206 thus provides improved lightning protection for the blade 408 over both substantially all of the suction surface of the blade 408 and the leading edge 409.

Figure 8 shows a cross section taken through a further embodiment of a rotor blade 508 according to an embodiment of the present invention. The rotor blade 508 includes a brace 513 formed as a separate moulded GRP component bonded to the internal structure of the blade 508. The brace supports a lightning bus 515 that is electrically coupled to a lightning receptor 207 through a connector 514.

The lightning receptor 207 is of elongated form and extends over both a suction surface and a pressure surface of the blade 508 and over leading edge 509 to project beyond the trailing edge 510 of the blade 508. The lightning receptor 207 thus encircles or extends substantially around a cross section of the blade 508. By substantially encircling the blade 508, the lightning receptor 207 provides improved lightning protection for the blade 508 such that it is protected from lightning strikes when the blade 508 is hit by an up/down stroke of the lightning bolt and when the blade 508 is ascending/descending whilst it rotates.

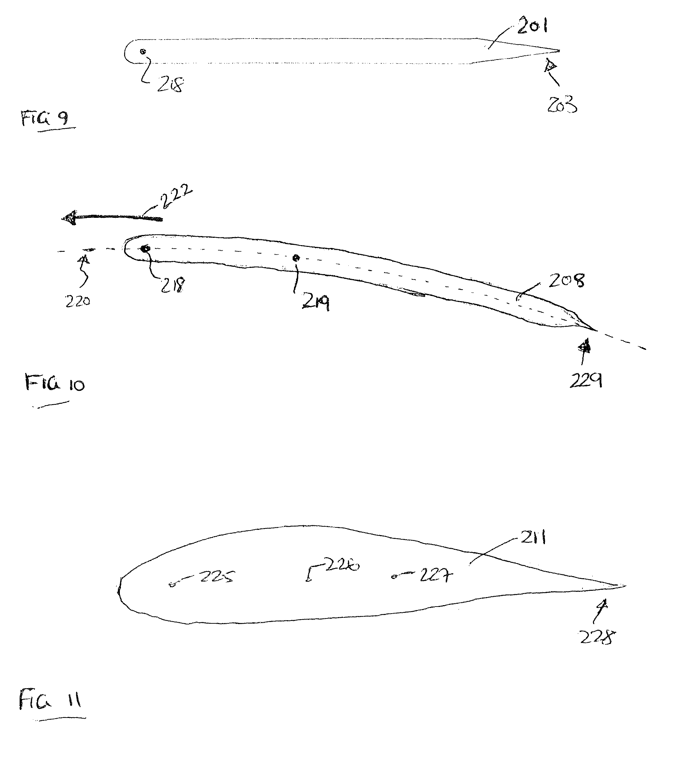

Figure 9 shows a lightning receptor 201 according to an embodiment of the present invention. The lightning receptor 201 is generally elongated in shape and has a tapered end 203. The tapered end 203 is designed to project beyond a trailing edge 210 of a blade 108. For example, the lightning receptor 201 can be tapered/pointed/pin-like etc. and thus be useful for enhancing electrostatic discharge (ESD) and/or the attractiveness of the lightning receptor 201 to lightning strikes. The use of thin whisker-like or wire-like elongated conductors to form a lightning receptor 201 also has the advantage of keeping weight down and does not substantially increase the drag experienced by a blade 108 when it rotates. The minimum dimensions of the lightning receptor 201 can be determined in accordance with IEC guidelines [15].

The lightning receptor 201 is made of a corrosion resistant conductive material such as copper or steel and is provided with a fixing means 218. The fixing means 218 can be provided, for example, as a screw, bolt, rivet, weld, etc. that can be fixed through the surface of a blade 108 to a connector 214 provided therein so as to provide electrical coupling between the lightning receptor 201 and the connector 214.

Figure 10 shows a lightning receptor 208 according to another embodiment of the present invention. The lightning receptor 208 is generally elongated in shape and has a tapered end 229. The tapered end 229 is designed to project beyond a trailing edge of a blade. The lightning receptor 208 is also curved in shape substantially along an arc 220 that the blade is designed to follow as it rotates in the direction of the arrow 222.

The lightning receptor 208 is made of a corrosion resistant conductive material such as copper or steel and is provided with two fixing means 218, 219. The fixing means 218, 219 can be provided, for example, as screws, bolts, rivets, welds, etc. that can be fixed through the surface of a blade to a connector provided therein so as to provide electrical coupling between the lightning receptor 208 and the connector. The use of a plurality of fixing means provides both an improved physical stability and durability for the link between the lightning receptor 208 and the connector and can also be used to electrically couple the lightning receptor 208 to one or more separate elements forming a part of a down-conductor (not shown). Hence lower resistance can be provided along with an element of in-built connector redundancy for improving the long-term reliability of the lightning receptor 208.

Figure 11 shows a lightning receptor 211 according to a further embodiment of the present invention. The lightning receptor 211 is generally teardrop in shape and has a tapered end 228. The tapered end 228 is designed to project beyond a trailing edge of a blade.

The lightning receptor 211 is made of a corrosion resistant conductive material such as copper or steel and is provided with three fixing means 225, 226, 227. The fixing means 225, 226, 227 can be provided, for example, as screws, bolts, rivets, welds, etc. that can be fixed through the surface of a blade to a connector provided therein so as to provide electrical coupling between the lightning receptor 211 and a connector. The use of a plurality of fixing means provides various advantages, as described above. Of course, those skilled in the art will realise that a plurality of lightning receptors may be mounted on a single turbine blade to further enhance the lightning protection thereof. For example, a plurality of such lightning receptors may be mounted inwardly away from the tip in a regularly spaced configuration or could alternatively be provided with a greater density (decreasing separation) nearer to the blade tip to enhance the lightning protection thereat. In addition, the use of various fixing means, and numbers and types thereof, will also be readily apparent to those skilled in the art.

Whilst the present invention has been described in accordance with various aspects and preferred embodiments, it is to be understood that the scope of the invention is not considered to be limited solely thereto and that it is the Applicant's intention that all variants and equivalents thereof also fall within the scope of the appended claims.

### References

1. US-A1-2007/0009361 (Moller Larson)
2. US-A1-2006/0013695 (Pedersen)
3. WO-A1-2007/017534 (Gamesa)
4. DE-C1-10022128 (Wobben)
5. WO-A2-2005/031158 (Vestas)
6. WO-A1-2007/038931 (LM Glasfiber)
7. US-A1-2004/0130842 (Johansen)
8. US-B1-6,457,943 (Olsen)
9. WO-A1-96/07825 (Bonus Energy)
10. DE-A1-19 501 267 (Autoflug Energietech)
11. JP-2004/342518 (Ebara)
12. JP-20021/41192 (Ota Gijutsu Jimusho)
13. JP-2002/320319 (Hokuriku Electric Power)
14. US-B1-6,932,574 (Wobben)
15. IEC Technical Report TR 61400-24, "Wind turbine generator systems - Part 24: Lightning protection", First Edition 2002-07, International Electrotechnical Commission, Geneva, Switzerland, 2002, ISBN 2-8318-6468-2

Where permitted, the contents of the above-mentioned references are hereby also incorporated into this application by reference in their entirety.

## Claims

1. A lightning protection system (200) for a wind turbine blade, the lightning protection system (200) comprising a conductive lightning receptor (201) for mounting at the surface (212) of a turbine blade (108) such that a portion (204) of the lightning receptor (201) projects beyond a trailing edge (210) of the turbine blade (108) when mounted at said surface (212).

2. The lightning protection system (200) of claim 1, wherein the lightning receptor (201) has a generally elongated shape and is configured to be mounted such that the greatest dimension of the lightning receptor (201) lies generally parallel to the direction in which the turbine blade (108) is designed to move.

3. A lightning protection system (200) for a wind turbine blade (108), the lightning protection system (200) comprising a conductive lightning receptor (201) for mounting at the surface (212) of a turbine blade (108), wherein the lightning receptor (201) has a generally elongated shape and is configured to be mounted such that the greatest dimension of the lightning receptor (201) lies generally parallel to the direction in which the turbine blade (108) is designed to move.

4. The lightning protection system (200) of claim 3, wherein a portion of the lightning receptor (204) is configured to project beyond a trailing edge (210) of the turbine blade (108) when mounted at said surface (212) thereof.

5. The lightning protection system (200) of any preceding claim, wherein the lightning receptor (201,208) is wire-shaped or whisker-shaped.

6. The lightning protection system (200) of any preceding claim, wherein the lightning receptor (201,208,211) has at least one tapered end (203,228,229).

7. The lightning protection system (200) of any preceding claim, wherein the lightning receptor (206,207) extends to a leading edge (409,509) of the turbine blade (408,508).

8. The lightning protection system (200) of any preceding claim, wherein the lightning receptor (207) encircles or extends substantially around a cross section of the blade (508).

9. The lightning protection system (200) of any preceding claim, comprising one or more additional lightning receptors (202,203,208,211).

10. A turbine blade (108) for a wind turbine (100), the turbine blade (108) comprising:
a shaped blade structure provided with one or more lightning buses (215) made from conductive material; and
the lightning protection system (200) according to any preceding claim mounted at the surface of the turbine blade (108) and electrically coupled to the one or more lightning buses.

11. The turbine blade (108) of claim 10, wherein the blade structure comprises glass reinforced plastic (GRP) and/or carbon reinforced plastic (CRP).

12. A wind turbine (100) for generating electricity, the wind turbine (100) comprising:
a supporting tower structure (104), the supporting tower structure (104) further comprising a lightning conductor for electrically coupling to a ground potential at a first end (116) thereof;
a nacelle (102) supported by said tower structure (104);
an electrical generator (112) housed in the nacelle (102);
a rotateable hub (110) mechanically coupled to the electrical generator (112); and
at least one turbine blade (108) according to claim 10 or claim 11 mechanically coupled to the hub (110), wherein the one or more lightning buses (215) of the at least one turbine blade (108) are electrically coupled through the rotateable hub (110) to a second end of the lightning conductor such that the lightning protection system (200) is electrically connected to the first end (116) of the lightning conductor.

13. A method of generating electricity, the method comprising:
operating the wind turbine (100) of claim 12; and
supplying electricity generated by the electrical generator (112) to an electricity grid for subsequent consumption by a consumer.

14. A method for protecting a wind turbine from lightning strikes, the method comprising retro-fitting the lightning protection system (200) according to any one of claims 1 to 9 to an existing wind turbine by:
electrically connecting each of at least one lightning receptor (201,202,203) to a respective lightning bus of a respective turbine blade of the existing wind turbine; and
mounting each of said at least one lightning receptor (201,202,203) at a respective surface of a respective turbine blade of the existing wind turbine.
